# EUROPÄISCHE PATENTSCHRIFT

(11) **EP 1 336 065 B1**
(45) Veröffentlichungstag und Bekanntmachung des Hinweises auf die Patenterteilung: **30.08.2006**
(21) Anmeldenummer: 01997661.2
(22) Anmeldetag: 19.11.2001
(51) Int. Cl.: F16M 11/04

(54) **STATIVKOPF, INSBESONDERE FÜR EINE MEDIZINISCHE ÜBERWACHUNGS- UND VERSORGUNGSEINRICHTUNG, TRÄGERPROFIL FÜR EINEN SOLCHEN UND GERÄTEWAGEN**
TRIPOD HEAD, ESPECIALLY FOR A MEDICAL MONITORING AND SUPPLY DEVICE, CARRIER PROFILE FOR SUCH A TRIPOD HEAD AND APPLIANCE TROLLEY
TETE DE PIED, NOTAMMENT DESTINEE A UN DISPOSITIF MEDICAL DE SURVEILLANCE ET D'ALIMENTATION, PROFILE DE SUPPORT POUR UNE TELLE TETE DE PIED ET CHARIOT D'APPAREILS

(30) Priorität: 21.11.2000 DE 10057556
(43) Veröffentlichungstag der Anmeldung: 20.08.2003
(73) Patentinhaber: TRUMPF Kreuzer Medizin Systeme GmbH + Co. KG, 82178 Puchheim (DE)
(72) Erfinder: KREUZER, Friedhelm, 81247 München (DE); RÖDER, Heinrich, 8045 Ismaning (DE)
(74) Vertreter: Hofer, Dorothea
(86) Internationale Anmeldenummer: PCT/EP2001/013367
(87) Internationale Veröffentlichungsnummer: WO 2002/042680

(56) Entgegenhaltungen:
- DE-A- 4 311 374
- DE-A- 19 748 480
- DE-U- 8 304 407
- US-A- 5 966 760

## Beschreibung

Die Erfindung betrifft einen Stativkopf, insbesondere für eine medizinische Überwachungs- und Versorgungseinrichtung, ein Trägerprofil für einen solchen und einen Gerätewagen.

Es sind medizinische Überwachungs- und Versorgungseinrichtungen bekannt, die ein Deckenstativ mit einem daran angebrachten Stativkopf umfassen, der medizinische Geräte und dergleichen trägt und über den Zuführungen für Strom, Gas etc. den Geräten zugeführt werden. Die Gerätebestückungen unterscheiden sich in der Gerätegröße und auch durch die Anzahl der einzusetzenden Geräte. Um eine Variabilität in der Gerätebestückung zu ermöglichen sind derartige Stativköpfe oft groß dimensioniert. In Räumen zur Diagnose und Therapie schwer kranker Patienten besteht jedoch allgemein ein geringes Platzangebot.

Aus der DE 197 48 480 A1 ist ein Trägerprofil mit einem ersten Profilabschnitt und einem zweiten Profilabschnitt bekannt, wobei der zweite Profilabschnitt einen Kanal zur Aufnahme von Versorgungsleitungen aufweist und wobei eine Abdeckung zum Verschließen des Kanals vorgesehen ist. Die beiden Profilabschnitte verlaufen gerade zueinander. Zum Tragen einer Konsole wird ein einziges solches Trägerprofil verwendet.

Es ist Aufgabe der Erfindung, einen verbesserten Stativkopf, insbesondere für eine medizinische Überwachungs- und Versorgungseinrichtung bereit zu stellen, mit dem insbesondere Platz gespart werden kann.

Die Aufgabe wird gelöst durc eine Trageinrichtung gemäß Patentanspruch 1, einem stativkopf gemäß Anschpruch 12 und einem Gesätewagen gemäß Patentanspruch 13. Weiterbildungen der Erfindung sind in den Unteransprüchen angegeben.

Weitere Merkmale und Zweckmäßigkeiten der Erfindung ergeben sich aus der Beschreibung von Ausführungsbeispielen anhand der Figuren.

Von den Figuren zeigen:
- Fig. 1a: eine schematische Vorderansicht einer medizinischen Überwachungs- und Versorgungseinrichtung;
- Fig. 1b: eine schematische Ansicht des Überwachungs- und Be-atmungsstativkopfes von Fig. 1a von der Seite gesehen;
- Fig. 1c: eine schematische Darstellung des Infusionsstativkopfes von Fig. 1a von der Seite gesehen;
- Fig. 2: einen Schnitt durch das Versorgungsteil des Stativkopfes von Fig. 1a entlang der Linie A - A;
- Fig. 3: einen Schnitt durch das Versorgungsteil gemäß Fig. 1a entlang der Linie B - B in geöffnetem Zustand;
- Fig. 4: einen Schnitt durch das Versorgungsteil gemäß Fig. 1a entlang der Linie A - A in geschlossenem Zustand;
- Fig. 5: eine teilgeschnittene Seitenansicht des Infusions-stativkopfes von Fig. 1a;
- Fig. 6a: einen Schnitt durch das Trägerprofil des Stativkopfes von Fig. 1a entlang der Linie C - C mit geschlossenem Leitungskanal;
- Fig. 6b: einen Schnitt durch das Trägerprofil des Stativkopfes von Fig. 1a entlang der Linie C -C mit geöffnetem Leitungskanal;
- Fig. 6c: einen Schnitt durch das Trägerprofil des Stativkopfes von Fig. 1a entlang der Linie C - C mit geöffnetem Leitungskanal mit abgenommener Abdeckung des Kabelkanals;
- Fig. 7: eine perspektivische Darstellung des erfindungsgemäßen Trägerprofils mit geöffneter Abdeckung des Leitungskanals;
- Fig. 8: eine perspektivische Darstellung eines Teils des Stativkopfes von Fig. 1a mit geöffneter Abdeckung des Leitungskanals des Trägerprofils;
- Fig. 9: eine perspektivische Darstellung von oben eines medizinischen Gerätewagens mit dem erfindungsgemäßen Trägerprofil mit geöffneter Abdeckung des Leitungs-kanals; und
- Fig. 10: eine perspektivische Darstellung des medizinischen Gerätewagens von Fig. 9 von unten mit geschlossener Abdeckung des Leitungskanals.

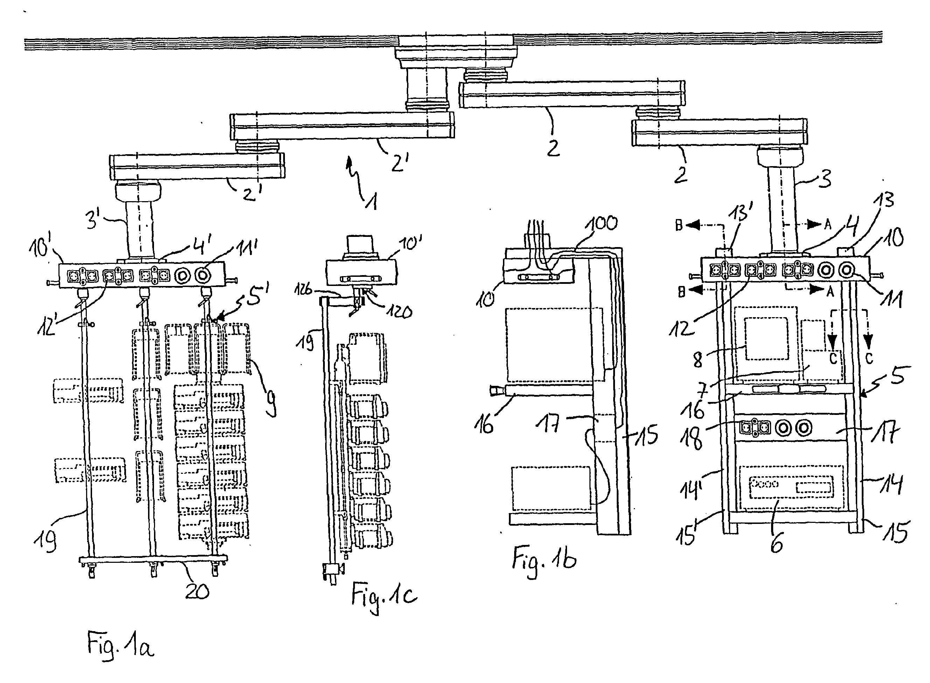

Fig. 1a zeigt ein Deckenstativ 1 mit an Schwenkarmen 2, 2' getragenen Tragsäulen 3, 3'. An jeder Tragsäule 3, 3' ist über eine Drehlagerplatte 4, 4' ein Stativkopf 5, 5' als Geräteträger- und Versorgungseinheit für darauf abgestellte Geräte bzw. daran angeklemmte Geräte angeordnet. Ein erster Stativkopf 5 ist als Überwachungs- und Beatmungsstativkopf zum Tragen darauf aufgestellter Geräte 6, 7, 8, wie z.B. einem Überwachungsmonitor, einem Rechner, einem Sichtgerät und einem Beatmungsgerät ausgebildet. Ein zweiter Stativkopf 5' ist als Infusionsstativkopf ausgebildet zum Anklemmen von Geräten, wie z.B. Infusions- und/oder Spritzenpumpen 9. Jeder Stativkopf 5,5' umfaßt ein über die Drehlagerplatten 4, 4' mit der Tragsäule 3, 3' verbundenes Versorgungsteil 10, 10'. Das Versorgungsteil 10, 10' beinhaltet Versorgungsleitungen, wie Schläuche und Kabel 100, die über die Schwenkarme 2, 2' und die als Stativrohr ausgebildete Tragsäule 3, 3' zugeführt werden zur Versorgung der von dem Stativkopf getragenen oder in unmittelbarer Umgebung auf dem Fußboden stehenden Geräte mit medizinischen Gasen, Medien, elektrischem Strom, Daten etc. Das Versorgungsteil 10, 10' beinhaltet außerdem die erforderlichen Anschlüsse verschiedenster Fabrikate, wie Gasanschlüsse 11, 11' für medizinische Gase, Elektroanschlüsse (Stark- und Schwachstrom) 12, 12' und Datenübertragungsverbindungselemente. Das Versorgungsteil ist als längliches Gehäuse ausgebildet und in Überkopfhöhe an der Tragsäule montiert.

Der Überwachungs- und Beatmungsstativkopf 5 weist zwei an der Oberseite des Versorgungsteils 10 symmetrisch zur Tragsäule 3, 3' befestigte horizontal ausgerichtete Traversen 13, 13', die aus einem U-förmigen Profil gebildet sind, auf, sowie zwei an den Traversen 13, 13' angebrachte vertikale Trägerprofile 14, 14' mit Leitungskanälen 15, 15'. An den Trägerprofilen 14, 14' sind horizontal verlaufende Konsolen 16 und/oder Schubladen- bzw. Tastaturblöcke zum Aufstellen von Geräten und zur Aufbewahrung von Zubehör etc. befestigt. Zwischen den Trägerprofilen 14, 14' sind weiterhin Horizontal-Leitungskanäle 17 vorgesehen zur Führung von Leitungen, bevorzugt mit zusätzlich eingebauten Geräteanschlüssen, Steckdosen und/oder Verbindungselementen 18.

Der Infusionsstativkopf 5' weist an der Unterseite des Versorgungsgehäuses 10' vertikale Rohre 19 als Pumpenstangen zum Anklemmen von Infusions- und/oder Spritzenpumpen 9 oder eines aus solchen Pumpen bestehenden Infusionssystems auf. Bevorzugt sind mehrere Pumpenstangen 19 in einem Abstand vom Versorgungsteil 10 über eine genormte Geräteschiene 20 miteinander verbunden zum Erhöhen der Stabilität des Systems. Die Pumpenstangen 19 sind, wie später beschrieben wird, in ihrer Position horizontal einstellbar.

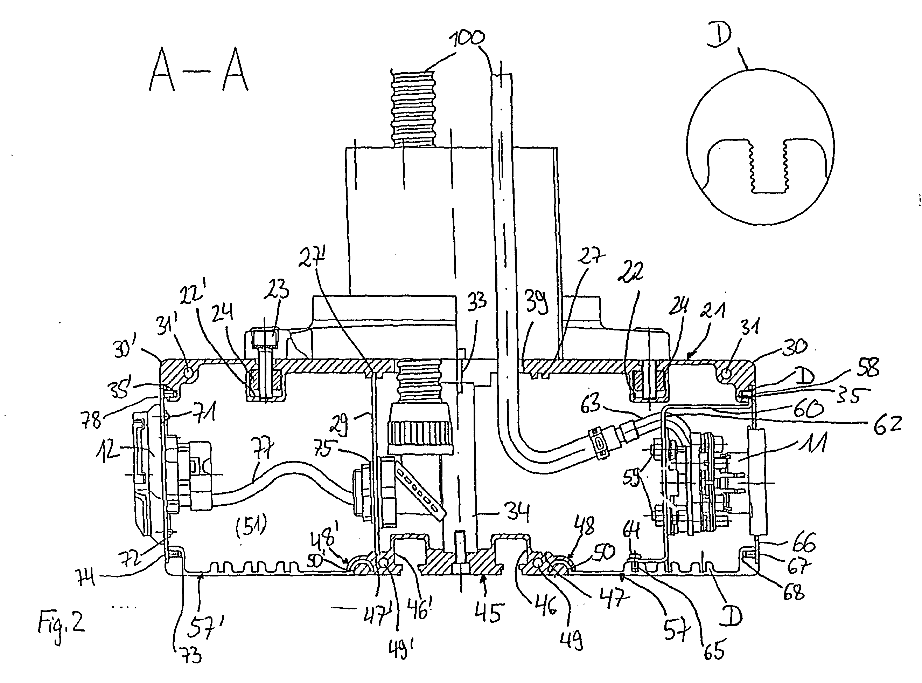

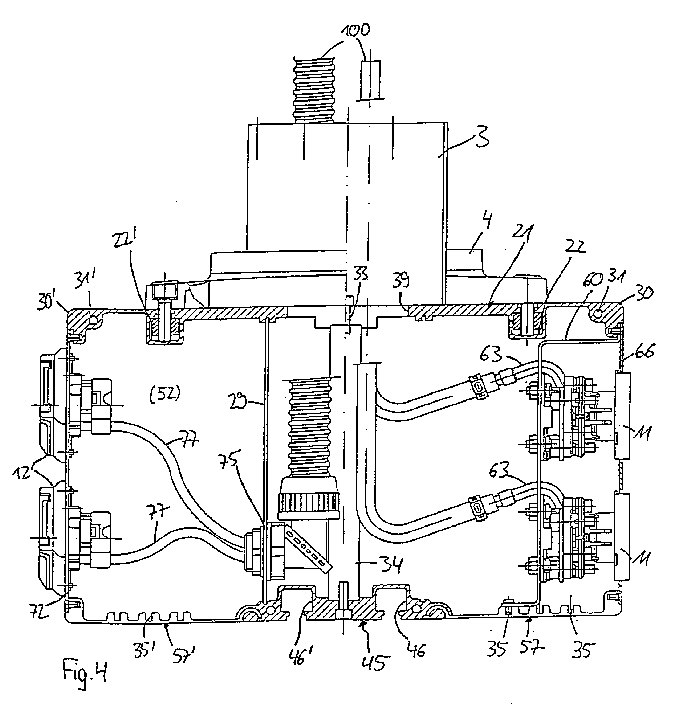

Wie aus den Figuren 2 bis 5 ersichtlich ist, ist das Versorgungsteil 10, 10' als Gehäuse ausgebildet, welches aus einem Oberprofil 21 und einem Unterprofil 45 mit im wesentlichen rechteckigem Umriß besteht, die über Abstandsbolzen 34 mit quadratischem Querschnitt miteinander verbunden sind. Das Unterprofil 45 weist dieselbe Länge wie das Oberprofil, aber eine kleinere Breite auf. Je nach Anzahl der eingebauten Anschlüsse 11, 12 ist das Versorgungsteil 10 durch entsprechende Länge der Abstandsbolzen 34 einzügig (51), wie in Fig. 2 dargestellt ist, oder zweizügig (52), wie in Fig. 4 dargestellt ist, ausgebildet. Je nach Länge des Versorgungsteils 10, 10' sind eine entsprechende Anzahl von Abstandsbolzen 34 in Längsrichtung vorgesehen.

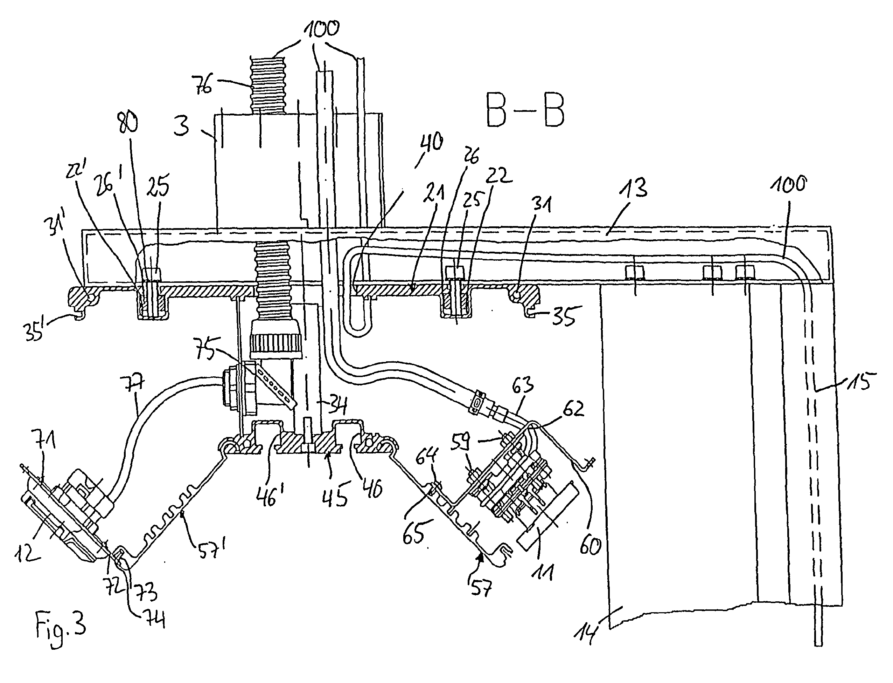

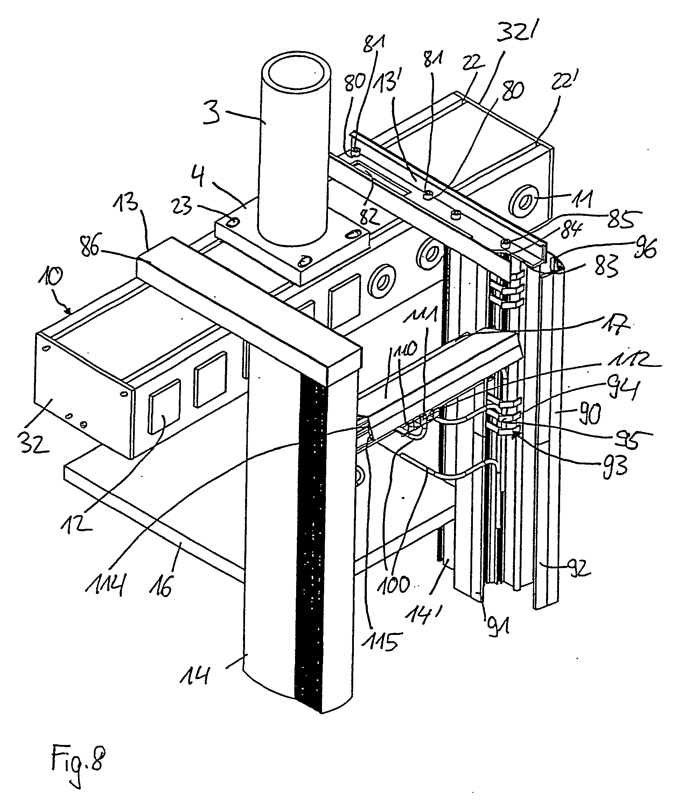

Das Oberprofil 21 weist an seiner Außenseite in einem Abstand von den Profilkanten 30, 30' in Längsrichtung ein Paar von parallel laufenden T-Nuten 22, 22' auf. Das Versorgungsteil 10, 10' ist an der Drehlagerplatte 4, 4' mittels Schrauben 23 und in die jeweilige T-Nut 22, 22' eingelegte Nutmuttern 24 befestigt, wie insbesondere aus den Figuren 2 und 4 und 8 ersichtlich ist. Ferner ist, wie insbesondere aus Fig. 3 und 8 ersichtlich ist, jede Traverse 13, 13' mittels Schrauben 25 und in die jeweilige T-Nut 22, 22' eingelegte Muttern 26 an dem Oberprofil 21 befestigt. Das Unterprofil 45 weist an seiner auf dem Oberprofil 21 abgewandten Seite ein parallel zu den Profilkanten 48, 48' verlaufendes T-Nutpaar 46, 46' zur Befestigung der Pumpenstangen 19 auf.

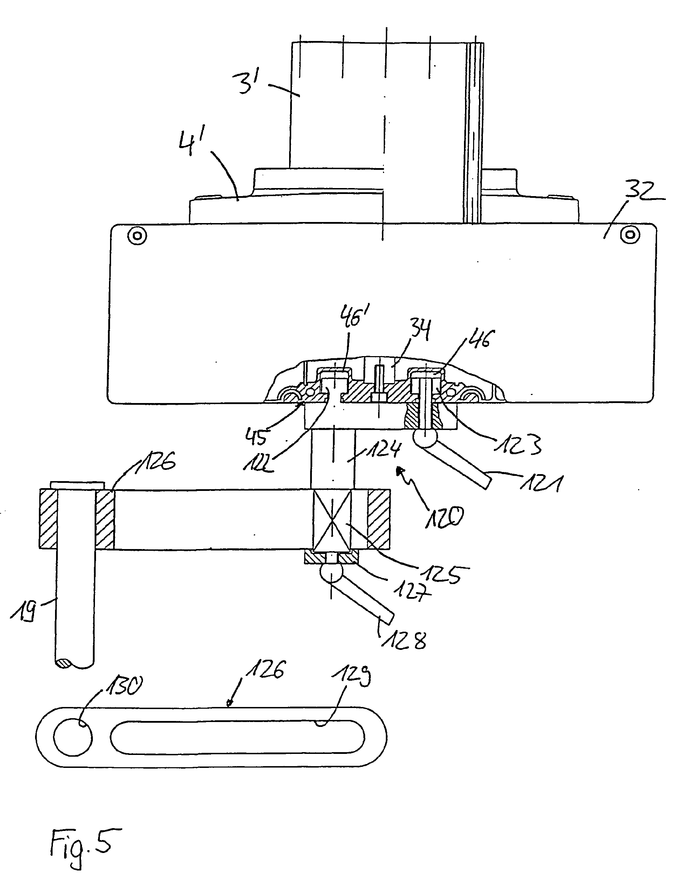

Das Oberprofil 21 und das Unterprofil 45 haben an ihren einander zugewandten Innenseiten einander gegenüberliegende Nutpaare 27, 47 bzw. 27', 47', die in einem Abstand von den jeweiligen Profilkanten vorgesehen sind und zum Einschieben von Abschott- bzw. Halteblechen 29 dienen. Ferner weisen das Oberprofil 21 und das Unterprofil 45 jeweils nahe ihrer Profilkante 30, 30' bzw. 48, 48' ein Gewindekanalpaar 31, 31' im Oberprofil bzw. 49, 49' im Unterprofil zum Anschrauben von Gehäuse-Seitenteilen 32, 32', wie insbesondere aus Fig. 5 und 8 ersichtlich ist, auf.

Das Oberprofil 21 beinhaltet an seinen gegenüberliegenden äußeren Rändern der Profilkanten 30, 30' jeweils ein Gewindeprofil 35, 35', welches insbesondere in Fig. 2 als Detail D dargestellt ist, zum Befestigen von Frontplatten 66. Ferner weist das Oberprofil 21 in seiner Mitte eine zentrale Ausnehmung 39 auf, welche in Form und Größe der Öffnung in der Drehlagerplatte 4, 4' entspricht, sowie in einem Abstand von dieser zentralen Ausnehmung 39 zwei weitere Ausnehmungen 40, 40', wie insbesondere aus Fig. 3 ersichtlich ist. Die Position der angebrachten Traversen 13, 13' entspricht in etwa der Position der Ausnehmungen und damit letztlich der Breite der zwischen den Trägerprofilen 14, 14' eingebauten Konsolen 16. In der Mitte des Oberprofils 21 ist ferner eine Nut 33 vorgesehen, die das Verdrehen der Abstandsbolzen 34 verhindert und somit der Montageerleichterung dient.

Das Unterprofil 45 weist jeweils an den gegenüberliegenden Profilkanten 48, 48' ein anprofiliertes Scharnierteil 50, 50' zum Anlenken von Schwenkchassis 57, 57', wie insbesondere aus den Figuren 2 und 3 ersichtlich ist, auf. Die Schwenkchassis 57, 57' sind als Profilteile ausgebildet, deren Länge der Länge des Unter- bzw. des Oberprofils entspricht. An ihrem in montiertem Zustand dem Unterprofil zugewandten Rand weisen sie entsprechende Gegenstücke zum Zusammenwirken mit den Scharnierteilen 50, 50' des Unterprofils auf. Die Schwenkchassis dienen zur Aufnahme von Anschlüssen 11,'12 und Verbindungselementen, wie beispielsweise IT-Verbindungselementen inklusive der dazu passenden Frontplatten 66.

Die Figuren 2 bis 4 zeigen in ihrer rechten Hälfte das Schwenkchassis 57, welches zur Aufnahme von Gasanschlüssen 11 bzw. Gas-Steckdosen dient. Jede Gas-Steckdose ist an ihrer Rückseite mit Schrauben 59 an einem Adaptionsbügel 60 angeschraubt, der für den betreffenden Dosentyp spezifische dosenseitige Befestigungsbohrungen und eine Ausnehmung 62 für ein Anschlußrohr 63 aufweist. Die nebeneinanderliegenden Adaptionsbügel 60 werden mittels Schrauben 64 in an der in eingebautem Zustand nach innen weisenden Gewindeprofilen 65 des Profilteiles des Schwenkchassis 57 befestigt. Das Schwenkchassis 57 ist ferner über die Adaptionsbügel 60 mittels Schrauben 58 in dem Gewindekanal 35 des Oberprofils 21 mit diesem verbunden. Ferner ist jeder Anschluß 11 mit der zu diesem Anschlußtyp passenden Frontplatte 66 abgedeckt, die mit Schrauben 67 in einem Gewindekanal 68 am äußeren Rand des Schwenkchassis 57 mit diesem und in dem Gewindekanal 35 des Oberprofils durch entsprechende Aussparungen in dem Adaptionsbügel mit dem Oberprofil verbunden ist. Das Schwenkchassis 57 erhält zusammen mit den Adaptionsbügeln 60 die erforderliche Festigkeit.

In der linken Hälfte der Figuren 2 bis 4 ist das Schwenkchassis 57' dargestellt, welches zur Aufnahme der Elektroanschlüsse 12 dient. Das Schwenkchassis 57' ist wie das Schwenkchassis 57 als Profilteil ausgebildet und weist an seinem äußeren Rand einen Gewindekanal 73 auf. Ferner ist eine Frontplatte 72 vorgesehen, mit Öffnungen 71 für die Elektroanschlüsse 12, die über mit dem Gewindekanal 73 des Schwenkchassis 57' zusammenwirkende Schrauben 74 mit dem Schwenkchassis 57' verbunden ist. Die Elektroanschlüsse 12 sind mit Kabeln 77 verbunden, die innerhalb von Schutzschläuchen 76 zugeführt werden, welche mittels bekannter Winkel-Verschraubungen 75 an dem Abschott- bzw. Halteblech 29 befestigt sind. Das Schwenkchassis ist über in den Gewindekanal 35' des Oberprofils 21 eingreifende Schrauben 78 mit dem Oberprofil verbunden. Im geschlossenen Zustand ist das Versorgungsteil 10, 10' somit verwindungssteif. Das Versorgungsteil 10, 10' ist gleichermaßen für den Überwachungs- und Beatmungsstativkopf 5 wie für den Infusionsstativkopf 5' einsetzbar. Je nach in dem Stativkopf verwendeten Geräten sind die entsprechende Art und Anzahl von Gasanschlüssen 11 bzw. Elektro- und Datenanschlüssen 12 vorgesehen.

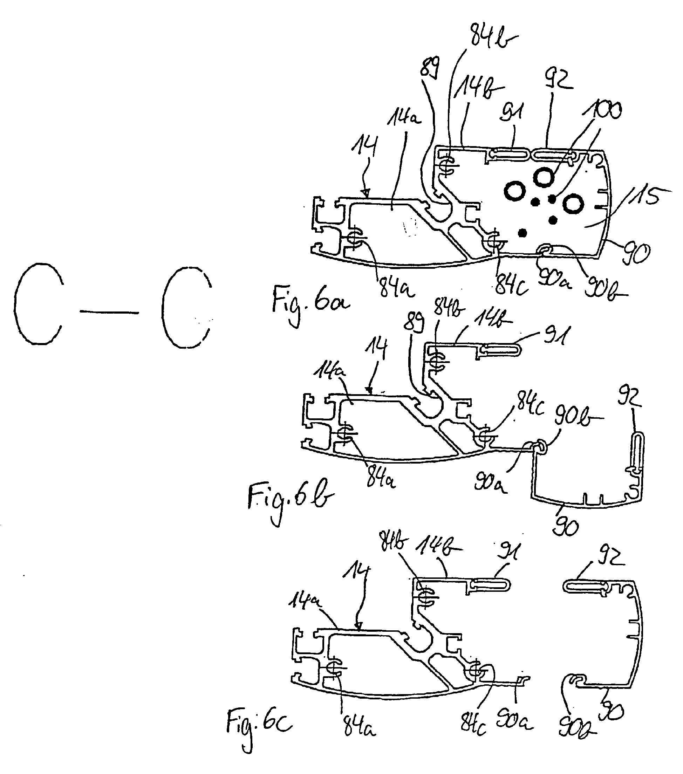

Nachfolgend wird der Aufbau des Überwachungs- und Beatmungsstativkopfes näher beschrieben. Die Traversen 13, 13' sind als U-Profil ausgebildet. Die Länge der Traversen entspricht der Breite des Versorgungsteils 10 bei geöffnetem Schwenkchassis 57 zuzüglich etwa der Breite des Trägerprofils 14 inklusive Leitungskanäle 15. Wie insbesondere aus den Figuren 3 und 8 ersichtlich ist, weist jede Traverse an ihrer dem Versorgungsteil 10 zugewandten Unterseite Bohrungen 80 für Schrauben 81 auf, welche mit den in dem T-Nutenpaar 22, 22' des Oberprofils 21 liegenden Nutmuttern 26, 26' verbunden sind. Weiterhin enthält die Unterseite eine mit den Ausnehmungen 40, 40' des Oberprofils fluchtende Öffnung 82. Die Traversen sind derart auf dem Oberprofil 21 befestigt, daß das eine Ende einer jeden Traverse mit der Vorderseite des Versorgungsteils bündig abschließt und das andere Ende über das Versorgungsteil übersteht. An dem überstehenden Teil ist das vertikale Trägerprofil befestigt. Jede Traverse weist an ihrem dem Trägerprofil 14 zugewandten Ende eine von diesem Ende her offene Ausnehmung 83 zum Hindurchführen der aus der Ausnehmung 40, 40' des Versorgungsteils 10 herauskommenden Leitungen in die Leitungskanäle 15, 15' der Trägerprofile 14, 14' auf. Die Trägerprofile 14, 14' weisen an ihrer den Traversen 13, 13' zugewandten Enden Gewindekanäle 84a, 84b, 84c (Fig. 6a-6c) auf, über die mittels mit diesem zusammenwirkenden Schrauben 85 die Trägerprofile 14, 14' jeweils mit den Traversen 13, 13' verbunden sind. Die Traversen 13, 13' weisen an ihrer dem Versorgungsteil abgewandten Seite eine Abdeckung 86, die mittels Anklipsen befestigbar ist, auf.

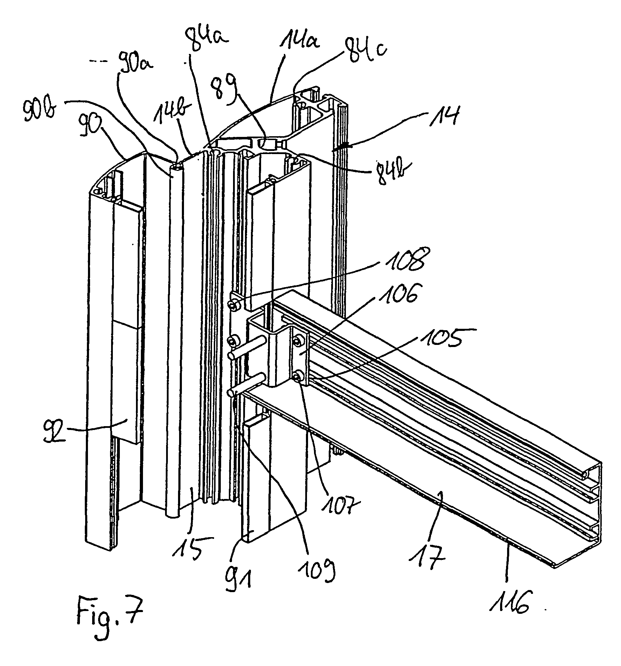

Wie aus Fig. 6a bis 6c und Fig. 7 ersichtlich ist, sind die Trägerprofile 14, 14', die als vertikale Befestigungsprofile für die Konsolen, Schubladenblöcke etc. dienen, aus einem Winkelprofil gebildet, welches einen ersten Abschnitt 14a und einem unter einem Winkel dazu verlaufenden zweiten Abschnitt 14b, die beide als Hohlprofil ausgebildet sind, umfaßt. Im Winkel zwischen dem ersten Abschnitt 14a und dem zweiten Abschnitt 14b verläuft eine Nut 89 zum Einsetzen von nicht dargestellten Nutsteinen und zum Befestigen von Konsolen etc.. Der erste Abschnitt 14a ist als geschlossenes Hohlprofil ausgebildet und der zweite Abschnitt 14b als offenes Hohlprofil, welches einen Leitungskanal 15 für darin verlaufende Leitungen 100 (Kabel und Gasleitungen) bildet und welches mit einer aushängbaren profilartigen Abdeckung 90 verschlossen ist. Hierzu weist der zweite Abschnitt 14b an einer Außenkante ein Scharnierteil 90a auf, welches mit einem entsprechenden Gegenteil 90b der Abdeckung 90 zusammenwirkt. Die einander zugewandten Kanten der Abdeckung 90 und des zweiten Abschnittes 14b des Winkelprofiles weisen jeweils eine hohle Dichtlippe 91, 92 auf, welche bei verschlossenem Kanal 15, 15' die aus diesem in beliebige Höhen hinausführenden Leitungen 100, die Schläuche und Kabel beinhalten, zum direkten Geräteanschluß elastisch umschließen und so das Eindringen von Fremdkörpern in den Leitungskanal 15, 15' verhindern.

Im Innern jedes Leitungskanals 15, 15' sind wenigstens drei kammartig nebeneinanderliegende und muldenförmig gebogene Halter 93 angeordnet, in denen die Leitungen 100 geführt und gegebenenfalls mit Bindern befestigt sind. Der mittlere 94 der Halter weist an der Muldenaußenseite eine elastische Rastnocke 95 auf, in welche eine entsprechende zweite an der Abdeckung 90 anprofilierte Nocke 96 eingreift, und die Abdeckung geschlossen hält. Zum Öffnen muß der die Rastnocke 95 enthaltende elastische Halter 94 mittels eines Werkzeuges durch den Spalt zwischen den Dichtlippen 91, 92 hindurch in das Kanalinnere geschoben werden, damit die Nocke 96 der Abdeckung freigegeben wird. Die Halter 93 sind auf an der Kanalinnenseite befindliche Profile angeklipst.

Wie insbesondere aus den Figuren 7 und 8 ersichtlich ist, sind zwischen den Trägerprofilen 14, 14' in beliebigen Höhen ein oder mehrere horizontale Leitungskanäle 17 montiert und mit Bügeln 106, von denen jeder mittels Schrauben in mit entsprechenden T-Nuten in einem Kanal 105 des Leitungskanals 17 liegenden Nutmuttern 107 und mittels in T-Nuten liegenden Nutmuttern 108 der Leitungskanäle 15, 15' verbunden sind. Aus jedem Bügel 106 ragen zwei Stifte 109 zur Führung der Leitungen. Die Leitungskanäle 17 sind wie die Leitungskanäle 15 mit einer abnehmbaren und auf- und zuschwenkbaren Abdeckung versehen. Im Inneren des Leitungskanals 17 befinden sich ein oder mehrere Gruppen kammartig nebeneinanderliegender, nach innen muldenförmig gebogener Halter 110 ähnlich den Haltern 93, in denen die Leitungen geführt und gegebenenfalls mit Binder befestigt sind. Der mittlere Halter 111 besitzt wiederum eine elastische Rastnocke 112, in welche eine an der Abdeckung 17a anprofilierte Nocke 114 eingreift und diese geschlossen hält. Mit der profilartigen Abdeckung wird der Kanal 17 verschlossen. Sowohl die Abdeckung, als auch die Profilkante enthalten je eine profilartige Dichtlippe 115, 116, die bei geschlossener Abdeckung die aus dem Leitungskanal 105 herausführenden Leitungen elastisch umschließen und so das Eindringen von Fremdkörpern in den Leitungskanal verhindern. Die Rastnocke 112 muß zum Öffnen ebenfalls mittels eines Werkzeuges durch den Spalt zwischen den Dichtlippen nach hinten geschoben werden, damit die Nocke der Abdeckung freigegeben wird. Die Horizontal-Leitungskanäle 17 haben den Vorteil, daß aufgrund des kurzen freiliegenden Verlaufs der Kabel zwischen Gerät und Kanal 17 ein reduzierter Reinigungsaufwand erforderlich ist und damit stabilere Hygieneverhältnisse und mehr Sicherheit gegenüber Kabelbeschädigungen gegeben sind.

Nachfolgend wird der Infusionsstativkopf 5' beschrieben. Wie aus Fig. 5 ersichtlich ist, weist der Infusionsstativkopf 5' an der Unterseite des Versorgungsteils 10 einen Halter 120 zur Aufnahme der Pumpenstangen 19 auf. Der Halter 120 weist einen in der Nut 46 des Unterprofils verschiebbaren angegossenen Nutstein 122, sowie einen damit verbundenen in der zweiten T-Nut 46' verschiebbaren Nutstein 123 auf. Der Nutstein 123 ist mittels einer Knebelschraube 121 lös- oder fixierbar. Der Halter weist ferner einen mit den Nutsteinen verbundenen vertikalen Arm 124 mit einem Zweikantabschnitt 125 an seinem unteren Ende auf, an welchem ein Arm 126 geführt ist. Der Arm 126 wird durch eine Knebelschraube 128 über eine Druckschreibe 127 geklemmt. Die Knebelschraube ist gegen Aufdrehen gesichert. Der Arm 126 weist an seinem dem Zweikant zugewandten Ende eine Ausnehmung 129 in Form eines Langlochs auf, über die der Arm quer zu den T-Nuten 46 verschiebbar ist. An seinem gegenüberliegenden Ende weist der Arm 126 eine Ausnehmung 130 auf, durch die die Pumpenstange 19 hindurchgeführt ist.

Durch die Verschiebbarkeit in den T-Nuten 46, 46' des Unterprofiles und durch die Verschiebbarkeit der Pumpenstange 19 relativ zu dem Tragarm 124 können die Pumpen des Infusionsstativkopfes 5' an eine beliebige Position zueinander geschoben werden. Dadurch kann das Infusionssystem mit variablen Abständen für Anpassung an die Pumpengröße angebracht werden. Zusätzlich können bei dem Infusionsstativkopf noch Trägerprofile 14, 14' alleine oder zusammen mit Horizontal-Leitungskanälen 17, wie bei dem Stativkopf 5 zur Führung der zu den Pumpen bzw. Geräten führenden Kabel bzw. Leitungen ergänzt werden.

Jede Pumpenstange 19 ist tiefeneinstellbar, so daß die Pumpen mit ihrem ungefähren Schwerpunkt in eine gedachte von der Drehlagerplatte 4' bestimmte verlängerte Drehachse des Stativkopfes 5' gebracht werden können. Da in dieser Geräteposition kein zusätzliches Drehmoment entsteht, wird ein höheres maximales Zuladungsgewicht erzielt und außerdem Platz gespart.

Für den Betrieb der Versorgungseinrichtung werden zunächst für den Überwachungs- und Gerätestativkopf 5 das Schwenkchassis 57 für die Gasanschlüsse in das Scharnier eingehängt und die Anschlüsse 11 in die jeweiligen Adaptionsbügel 60 eingesetzt. Die Bestückung erfolgt somit in offenem Zustand des Versorgungsteils 10. Anschließend wird das Schwenkchassis 57 hochgeklappt und die Adaptionsbügel 60 mittels der Schrauben 58 in den Gewindekanälen 35 angeschraubt. Dann wird die jeweilige passende Frontplatte 66 für jeden Anschluß aufgeschraubt. Das Schwenkchassis 57' für die Elektroanschlüsse wird in weggeschwenktem Zustand mit der entsprechenden Frontplatte für den jeweiligen entsprechenden Elektroanschluß 12 versehen und die erforderlichen Kabelverbindungen hergestellt. Anschließend wird das Schwenkchassis 57' hochgeklappt und mittels Schrauben 78, die mit den Gewindekanälen 35' des Oberprofils zusammenwirken, mit dem Oberprofil 21 verbunden. Die aus den Ausnehmungen 40, 40' des Versorgungsteils herausgeführten Leitungen werden in die Leitungskanäle 15, 15' der Trägerprofile 14, 14' und gegebenenfalls in die Horizontalleitungskanäle 17 eingelegt und an den entsprechenden Stellen herausgeführt, so daß nur ein kurzes Stück freier Leitung zwischen Leitungskanal und Gerät verbleibt. Der Infusionsstativkopf wird entsprechend mit der notwendigen Anzahl von Pumpenstangen 19 mit den entsprechenden Pumpen versehen.

Durch die Verschiebbarkeit der Geräte bzw. der Gerätehalterungen in den T-Nuten des Versorgungsteils 10 ist eine Anpassung an verschiedene Breiten von Konsolen 16 bzw. von Geräten möglich. Dadurch kann in Abhängigkeit von den verwendeten Geräten stets der kleinste Platz zur Verfügung gestellt werden. Selbst wenige Zentimeter an Platzersparnis beinhalten schon einen Vorteil.

Die Leitungen 100 sind in den Leitungskanälen 15, 15' geführt und liegen damit nicht offen. Über die Horizontal-Leitungskanäle 17 ist es ferner möglich, an entsprechende Stellen Leitungen zuzuführen, ohne daß diese über einen größeren Raum offen ausliegen. Dadurch wird die Sicherheit und die Hygiene erhöht.

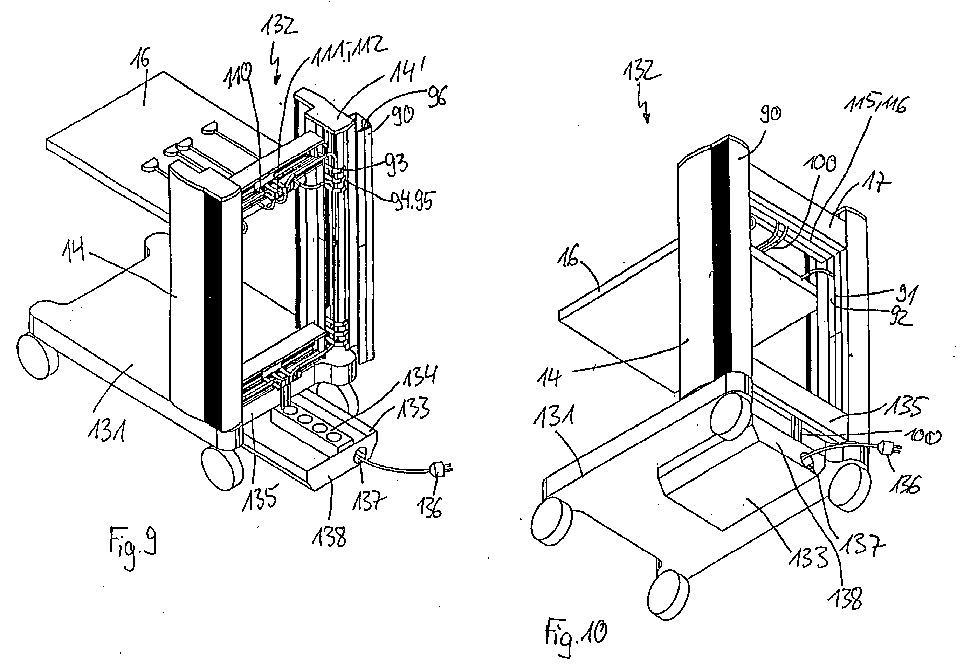

In einer weiteren, in Figuren 9 und 10 gezeigten Ausführungsform der Erfindung, ist das erfindungsgemäße Tragprofil 14, 14' mit den Leitungskanälen 15, 15' alleine oder zusammen mit horizontalen Leitungskanälen 17 und den oben beschriebenen Konsolen 16, Schubladenblöcken etc. mit einem Fahrgestell 131 verbunden, mit dem die Trägerprofile 14, 14' verschraubt sind. Somit ist ein Gerätewagen 132 gebildet. Die Breite, Höhe und Tiefe sowie Anzahl der Konsolen, Schubladenblöcke etc. ist frei wählbar. An der Unterseite des Fahrgestells 131 ist eine Lade 133 vorgesehen, die von der Funktion her gesehen, einen Teil der Aufgabe des Versorgungsteils 10 des Stativkopfes erfüllt. Die Lade 133 weist beispielsweise einen Netzverteiler 134, einen Trenntransformator und eine Potentialausgleichsleiste und anderes auf. Unmittelbar über der Lade 133 ist ein horizontaler Leitungskanal 135 vorgesehen, in den die aus der Lade 133 austretenden Kabel 100 über die oben beschriebenen kammartig angeordneten und muldenförmig gebogenen Halter 110, 111 eintreten und geführt werden. Die Leitungen werden anschließend durch den vertikalen Leitungskanal 15, 15' entweder direkt zu den Geräten oder zusätzlich durch einen unmittelbar über einer Konsole 16 angebrachten horizontalen Leitungskanal 17 geführt. Netzkabel und andere Kabel 136 zur Versorgung des mobilen Arbeitsplatzes kommen aus einer Öffnung 137 der Ladenblende 138, welche so groß bemessen ist, daß zum Arbeitsplatz-Transfer die Kabel hineingeschoben werden können. Die Lade 133 ist mit einem Werkzeug zu öffnen.

Somit ermöglichen sowohl beim Deckenstativ wie auch beim Gerätewagen die vertikalen und horizontalen Leitungskanäle eine Führung des größten Teils der Kabel und Leitungen bzw. Schläuche, und es bleiben nur noch kurze geräteseitige Leitungsenden sichtbar.

In einer weiteren Ausführungsform werden von Geräteteilen nicht abgedeckte T-Nuten mit eingelegten elastischen Profilen flüssigkeitsdicht verschlossen.

## Patentansprüche

1. Trageinrichtung, insbesondere für eine medizinische Versorgungseinrichtung, mit einem Trägerprofil mit einem ersten Profilabschnitt (14a) und einem dazu unter einem Winkel verlaufenden zweiten Profilabschnitt (14b), wobei der zweite Profilabschnitt (14b) einen Kanal (15, 15') zur Aufnahme von Versorgungsleitungen oder dergleichen aufweist und wobei eine Abdeckung (90) zum Verschließen des Kanals vorgesehen ist und wobei ferner zwei solcher Trägerprofile (14, 14') über quer zu diesen verlaufende Konsolen (16) zum Tragen von Geräten und/oder Leitungskanälen (17) zum Bilden eines Gestells miteinander verbunden sind.

2. Trageinrichtung nach Anspruch 1, **dadurch gekennzeichnet, daß** die Abdeckung (90) an einer Seite des zweiten Profilabschnitts (14b) schwenkbar befestigt ist.

3. Trageinrichtung nach Anspruch 1 oder 2, **dadurch gekennzeichnet, daß** die Abdeckung (90) abnehmbar ist.

4. Trageinrichtung nach einem der Ansprüche 1 bis 3, **dadurch gekennzeichnet, daß** zwischen der Abdeckung und dem Rand des zweiten Profilabschnitts eine Dichtlippe (91, 92) vorgesehen ist.

5. Trageinrichtung nach einem der Ansprüche 1 bis 4, **dadurch gekennzeichnet, daß** im Innern des Kanals eine Haltevorrichtung (93, 94) zum Halten und Führen der Versorgungsleitungen vorgesehen ist.

6. Trageinrichtung nach Anspruch 5, **dadurch gekennzeichnet, daß** die Haltevorrichtung wenigstens drei nebeneinanderliegende gebogene Haltezähne (93, 94) aufweist.

7. Trageinrichtung nach Anspruch 6, **dadurch gekennzeichnet, daß** der mittlere Zahn eine Rastnocke (95) aufweist, in die eine an der Abdeckung an entsprechender Stelle vorgesehene Nocke (96) eingreift.

8. Trageinrichtung nach einem der Ansprüche 1 bis 7, **dadurch gekennzeichnet, daß** in dem Winkel zwischen dem ersten und dem zweiten Profilabschnitt eine Nut (89) zum Befestigen quer zum Trägerprofil verlaufenden Tragteilen (16) vorgesehen ist.

9. Trageinrichtung nach einander Ansprüche 1 bis 8, **dadurch gekennzeichnet, daß** die quer verlaufenden Leitungskanäle eine schwenkbare Abdekkung (113) aufweisen.

10. Trageinrichtung nach einen der Ansprüche 1 bis 9 oder 10, **dadurch gekennzeichnet, daß** die Leitungskanäle (17) eine Haltevorrichtung (110, 111, 112) zum Halten der Leitungen aufweisen.

11. Trageinrichtung nach einem der Ansprüche 1 bis 10, **dadurch gekennzeichnet, daß** die Leitungskanäle (17) und/oder die Abdeckung Dichtlippen (115, 116) aufweisen.

12. Stativkopf für ein Stativ, insbesondere für eine Versorgungseinrichtung für Patienten, mit einem Versorgungsteil (10, 10') mit Zuführungen von Versorgungsleitungen (100) und einer an dem Versorgungsteil (10, 10') angebrachten Trageinrichtung (13, 13', 14, 14', 16; 19, 120) zum Tragen von Geräten,
**dadurch gekennzeichnet, daß** die Trageinrichtun wenigstens zwei Trägerprofile nach einem der Ansprüche 1 bis 11 aufweist.

13. Gerätewagen, insbesondere zur Aufnahme medizinischer Geräte, mit einem Fahrgestell (131) und wenigstens zwei darauf montierten Trägerprofilen nach einem der Ansprüche 1 bis 11, wobei an den Trägerprofilen (14, 14') wenigstens eine sich quer zu diesen erstreckende Konsole (16) zum Tragen von Geräten vorgesehen ist.

14. Gerätewagen nach Anspruch 13, **dadurch gekennzeichnet, daß** unter dem Fahrgestell eine herausziehbare Lade (133) zur Aufnahme von Leitungszuführungen (134, 136) vorgesehen ist.

## Claims

1. Carrying device, in particular for a medical supply device including a carrier profile with a first profile section (14a) and a second profile section (14b) positioned at an angle thereto, the second profile section (14b) comprising a duct (15, 15') for accommodating supply lines or the like and wherein a cover (90) for closing the duct is provided and furthermore two such carrier profiles (14, 14') are connected via consoles (16) running crosswise thereto for carrying appliances and/or ducts (17) for forming a stand.

2. Carrying device according to claim 1, **characterized in that** the cover (90) is pivotably fixed on one side of the second profile section (14b).

3. Carrying device according to claim 1 or 2, **characterized in that** the cover (90) is removable.

4. Carrying device according to one of claims 1 to 3, **characterized in that** a sealing lip (91, 92) is provided between the cover and the border of the second profile section.

5. Carrying device according to one of claims 1 to 4, **characterized in that** a holding device (93, 94) is provided inside the duct for holding and guiding the supply lines.

6. Carrying device according to claim 5, **characterized in that** the holding device has at least three curved holding teeth (93, 94) located next to one another.

7. Carrying device according to claim 6, **characterized in that** the middle tooth has a catching cam (95) into which a cam (96) provided on the cover at a corresponding point engages.

8. Carrying device according to one of claims 1 to 7, **characterized in that** in the angle between the first and the second profile sections a groove (89) is provided for fixing carrying parts (16) running crosswise to the carrier profile.

9. Carrying device according to one of claims 1 to 8, **characterized in that** the crosswise-running ducts (17) have a pivotable cover (113).

10. Carrying device according to one of claims 1 to 9, **characterized in that** the ducts (17) have a holding device (110, 111, 112) for holding the lines.

11. Carrying device according to one of claims 1 to 10, **characterized in that** the ducts (17) and/or the cover have sealing lips (115, 116).

12. Support head for a tripod, in particular for a supply device for patients, having a supply part (10, 10') with feeds of supply lines (100) and a carrying device (13, 13', 14, 14', 16; 19, 120) attached to the supply part (10, 10') for carrying appliances, **characterized in that** the carrying device comprises at least two carrier profiles according to one of claims 1 to 11.

13. Appliance trolley, in particular for accommodating medical appliances, with an undercarriage (131) and at least two carrier profiles mounted thereon according to one of claims 1 to 11, wherein at least one console (16) extending crosswise thereto for carrying appliances is provided on the carrier profiles (14, 14').

14. Appliance trolley according to claim 13, **characterized in that** a pull-out drawer (133) for accommodating line feeds (134, 136) is provided below the undercarriage.

## Revendications

1. Dispositif support, en particulier pour un dispositif d'alimentation médical, avec un profilé support ayant un premier tronçon de profilé (14a) et un deuxième tronçon de profilé (14b) s'étendant sous un certain angle par rapport à celui-ci, le deuxième tronçon de profilé (14b) présentant un canal (15, 15') pour recevoir des lignes ou conduites d'alimentation ou analogues, et un recouvrement (90) pour la fermeture du canal étant prévu, et où en outre deux profilés support (14, 14') de ce type sont reliés ensemble par l'intermédiaire de consoles (16) s'étendant transversalement par rapport à ceux-ci pour supporter des appareils et/ou des canaux pour lignes ou conduites (17) afin de former un bâti.

2. Dispositif support selon la revendication 1, **caractérisé en ce que** le recouvrement (90) est fixé à pivotement sur une face du deuxième tronçon de profilé (14b).

3. Dispositif support selon la revendication 1 ou 2, **caractérisé en ce que** le recouvrement (90) est démontable.

4. Dispositif support selon l'une des revendications 1 à 3, **caractérisé en ce qu'**une lèvre d'étanchéité (91, 92) est prévue entre le recouvrement et le bord du deuxième tronçon de profilé.

5. Dispositif support selon l'une des revendications 1 à 4, **caractérisé en ce qu'**un dispositif de maintien (93, 94) est prévu à l'intérieur du canal pour maintenir et guider les lignes et conduites d'alimentation.

6. Dispositif support selon la revendication 5, **caractérisé en ce que** le dispositif de maintien présente au moins trois dents de maintien (93, 64) coudées, placées les uns à côté des autres.

7. Dispositif support selon la revendication 6, **caractérisé en ce que** la dent médiane présente un ergot d'encliquetage (95) dans lequel s'engage un ergot (96) prévu en un emplacement correspondant sur le recouvrement.

8. Dispositif support selon l'une des revendications 1 à 7, **caractérisé en ce qu'**une rainure (89) est prévue dans l'angle entre le premier et le deuxième tronçons de profilé, pour la fixation de parties support (16) s'étendant transversalement par rapport au profilé support.

9. Dispositif support selon l'une des revendications 1 à 8, **caractérisé en ce que** les canaux pour lignes ou conduites s'étendant transversalement présentent un recouvrement (113) susceptible de pivoter.

10. Dispositif support selon l'une des revendications 1 à 9 ou 10, **caractérisé en ce que** les canaux pour lignes ou conduites (17) présentent un dispositif de maintien (110, 111, 112) pour le maintien des lignes ou conduites.

11. Dispositif support selon l'une des revendications 1 à 10, **caractérisé en ce que** les canaux pour lignes ou conduites (17) et/ou le recouvrement présentent des lèvres d'étanchéité (115, 116).

12. Tête de pied pour un pied, en particulier pour un dispositif d'alimentation pour des patients, avec une partie d'alimentation (10, 10') comprenant des amenées de lignes ou conduites d'alimentation (100) et un dispositif support (13, 13', 14, 14', 16 ; 19, 120) monté sur la partie d'alimentation (10, 10') pour porter des appareils, **caractérisée en ce que** le dispositif support présente au moins deux profilés support selon l'une des revendications 1 à 11.

13. Chariot pour appareils, en particulier pour supporter des appareils médicaux avec un bâti mobile (131) et au moins deux profilés support montés sur lui, selon l'une des revendications 1 à 11, sur les profilés support (14, 14') étant prévue au moins une console (16) s'étendant transversalement par rapport à ceux-ci, pour porter des appareils.

14. Chariot pour appareils selon la revendication 13, **caractérisé en ce que** sous le bâti mobile est prévu un tiroir (133) extractible, pour recevoir des amenées de lignes ou conduites (134, 136).
